# EUROPEAN PATENT SPECIFICATION

(11) **EP 3 427 896 B1**
(45) Date of publication and mention of the grant of the patent: **08.04.2020**
(21) Application number: 17762852.6
(22) Date of filing: 16.02.2017
(51) Int. Cl.: B24B 27/04, B24B 19/26

(54) **GRINDING DEVICE FOR SCARF SANDING**
SCHLEIFVORRICHTUNG FÜR SCHLEIFARBEITEN
DISPOSITIF DE MEULAGE POUR SABLAGE DE DÉCRIQUAGE

(30) Priority: 10.03.2016 JP 2016046541
(43) Date of publication of application: 16.01.2019
(73) Proprietor: Shinmei Tohoku Machinery Co., Ltd., Natori-shi, Miyagi 981-1251 (JP)
(72) Inventor: SUGAYAMA, Katsumi, Natori-shi Miyagi 981-1251 (JP)
(74) Representative: FDST Patentanwälte
(86) International application number: PCT/JP2017/005749
(87) International publication number: WO 2017/154509

(56) References cited:
- WO-A2-2014/033061
- JP-A- S5 387 086
- JP-A- H10 296 606
- JP-A- S57 194 868
- US-A1- 2014 141 190

## Description

### TECHNICAL FIELD

The present invention relates to a grinding device for grinding a workpiece, and particularly relates to a grinding device that performs a scarf sanding process in repair work of a composite material such as, e.g., CFRP (carbon fiber reinforced plastics) that is used as a material of a body of an aircraft.

### BACKGROUND ART

In recent years, in the field of production of an aircraft, CFRP (carbon fiber reinforced plastics) that is light and has high strength is frequently used. In some of the recent latest passenger aircrafts, the CFRP accounts for 50% or more of the total weight of the aircraft. For example, a composite material formed of CFRP (carbon fiber reinforced plastics) or the like is used in an outer plate forming the outer surface of a fuselage or a wing of an aircraft, and the composite material is formed by stacking a plurality of CFRP sheets in layers.

On the other hand, when a portion of the body of the aircraft in which CFRP is used (CFRP portion) is damaged by an impact or the like, restoration and repair need to be performed. For example, when the portion damaged by the impact or the like (defective portion) is found during maintenance of the body, repair work in which the defective portion is removed and a concave portion formed by the removal is filled with the composite material is performed.

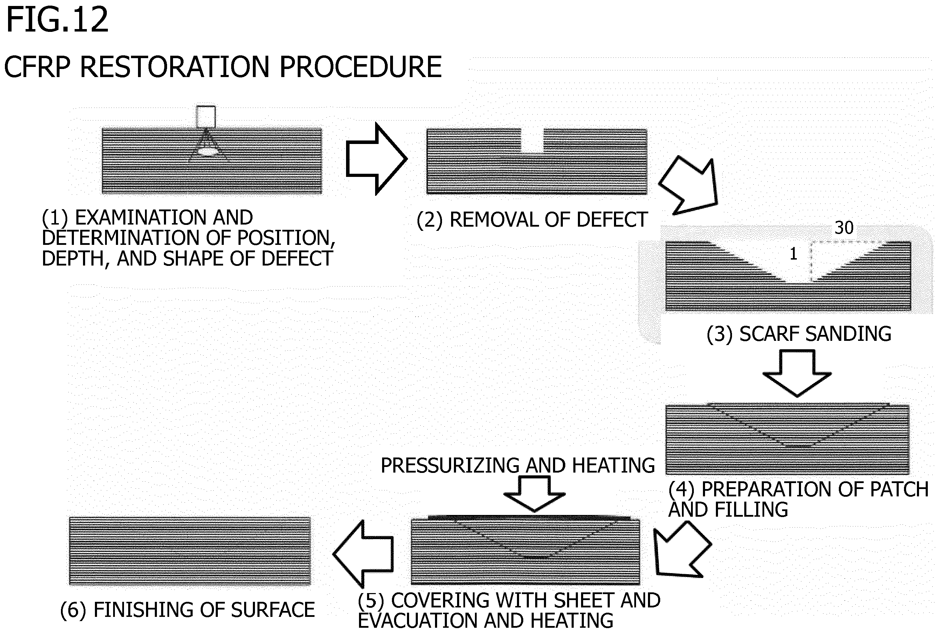

Fig. 12 is a view illustrating a restoration procedure of the CFRP portion. (1) When examination and determination of the position, depth, and shape of a defect of the CFRP portion are completed, (2) the defective portion is removed, and (3) scarf sanding work is further performed. Scarf sanding is a grinding process for peeling, in order to avoid concentration of stress on the concave portion formed by removing the defective portion, a portion around the concave portion layer by layer and grinding the portion into a bowl-like shape (Patent Literature 1). Thereafter, (4) a patch is prepared and filling is performed, (5) the filling portion is covered with a sheet, and is heated and pressurized, and (6) lastly, the surface of the filling portion is finished.

### CITATION LIST

### PATENT LITERATURE

Patent Literature 1: Japanese Patent Application Publication No. 2014-100847; Patent Literature 2: International Patent Application Publication No. WO 2014/033061. The document WO 2014/033061, which is considered to represent the closest prior art to the invention, teaches a solution for placing a flat rectangular grinding surface of a grindstone as parallel as possible onto a surface to be ground by using a cardanic suspension of the grindstone. The grinding pressure applied by a manipulation device, especially a robotic arm, effects the intended self-alignment of the grindstone due to the cardanic suspension of the grindstone.

### SUMMARY OF INVENTION

### PROBLEMS TO BE SOLVED BY THE INVENTION

The entire process for restoring and repairing the CFRP portion described above is performed manually by a worker under present conditions. In particular, a "scarf sanding" process for grinding the portion around the defective portion into the bowl-like shape needs sophisticated techniques, and hence a skilled worker spends a long time performing the "scarf sanding" process under present conditions. In addition, the quality of the scarf sanding significantly depends on the skill of the worker, and there is a possibility that the quality thereof is not stabilized. Further, the number of workmen who are able to perform the "scarf sanding" process is limited. Consequently, in the case where the repair of the CFRP portion is performed, the repair needs a long time period, and hence management of aircrafts in an airline company is significantly influenced.

In addition, most of the surface of the body of the aircraft is formed of a curved surface and the curvature of the curved surface varies from one portion of the body of the aircraft to another, which has made it difficult to mechanize the scarf sanding.

To cope with this, an object of the present invention is to provide a grinding device for scarf sanding capable of performing a scarf sanding process.

### MEANS FOR SOLVING THE PROBLEMS

A grinding device of the present invention for achieving the above object is a grinding device for grinding a workpiece, the grinding device
according to claim 1 includes: a main frame that rotates about a rotary shaft and is able to move in parallel on a horizontal plane vertically intersecting an axial direction; a first swingable frame that is disposed so as to be spaced from the main frame in the axial direction and is swingably mounted to the main frame; a pitch feed frame that is mounted to the first swingable frame so as to be able to move in parallel on a horizontal plane intersecting the axial direction; and a second swingable frame that is swingably mounted to the pitch feed frame, wherein the first swingable frame is coupled to the main frame at a first pivot provided so as to be displaced from a shaft center, and is able to swing relative to the main frame about the first pivot, the second swingable frame has a contact that comes into contact with a surface of the workpiece and a grindstone that grinds the workpiece, is coupled to the pitch feed frame at a second pivot provided on a perpendicular extending from a center of a contact position of the contact that is displaced from the shaft center, and is able to swing relative to the pitch feed frame about the second pivot, and the grindstone is mounted to the second swingable frame so as to grind a portion in a vicinity of the contact position of the contact.

An alternative grinding device for achieving the above object is provided by claim 11.

### ADVANTAGEOUS EFFECTS OF THE INVENTION

According to the present invention, it is possible to perform the scarf sanding process by using the device without depending on manual work by a worker, and quantify and standardize the scarf sanding work. In addition, it is possible to perform the scarf sanding process on the workpiece having any shape such as a flat surface shape or a curved surface shape.

### BRIEF DESCRIPTION OF DRAWINGS

Fig. 1 is a front view illustrating an example of a first configuration of a grinding device for scarf sanding in the embodiment of the present invention.
Figs. 2A-2D are views illustrating examples of the locus and external structure of the cam 18.
Fig. 3 is a partial view illustrating the configuration of coupling between the main frame 16 and the first swingable frame 20.
Fig. 4 is a view in which a positional relationship between the pitch feed frame 24 and the second swingable frame 28 is viewed from above.
Fig. 5 is a partial view illustrating the configuration of coupling between the pitch feed frame 24 and the second swingable frame 28.
Fig. 6 is a view illustrating the state of the grinding device when the grinding operation is allowed or being performed.
Figs. 7A-7D are views schematically illustrating steps of layer grinding.
Figs. 8A-8D are views schematically illustrating steps of layer grinding.
Fig. 9 is a view schematically illustrating steps of layer grinding.
Fig. 10 is a view illustrating a second configuration of the grinding device for scarf sanding in the embodiment of the present invention.
Fig. 11 is a view illustrating a third configuration of the grinding device for scarf sanding in the embodiment of the present invention.
Fig. 12 is a view illustrating a restoration procedure of the CFRP portion.

### DESCRIPTION OF EMBODIMENTS

Hereinbelow, an embodiment of the present invention will be described with reference to the drawings. Note that the embodiment is not intended to limit the technical scope of the present invention.

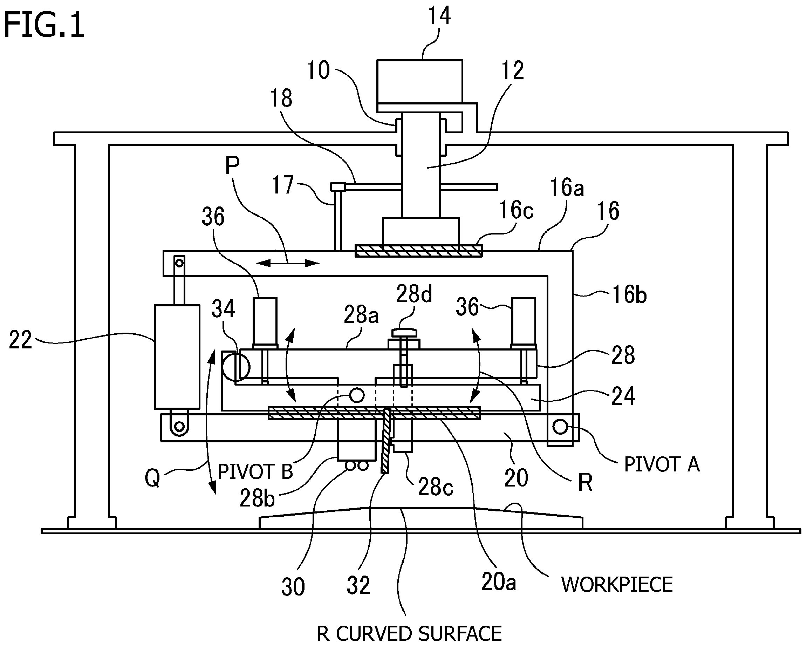

Fig. 1 is a front view illustrating an example of a first configuration of a grinding device for scarf sanding in the embodiment of the present invention (illustrating a partial internal structure for descriptive convenience). In the example of the first configuration, a rotary shaft 12 is mounted to a frame case 10 having a bearing with a vertical direction used as its axial direction. The rotary shaft 12 is rotationally driven by a drive motor 14. A workpiece is placed on a stand such that the machining center of the workpiece matches the shaft center of the rotary shaft, and a grindstone mounted to the grinding device grinds the workpiece while revolving around the machining center. The workpiece is formed of CFRP (carbon fiber reinforced plastics) that is used as a material of a body of an aircraft, and is a composite material in which layers are stacked such that fiber directions are alternated.

A main frame 16 has a horizontal frame portion 16a that is a square outer frame disposed so as to face a horizontal plane vertically intersecting the axial direction, and a space frame portion 16b that extends vertically downward from one end side of the horizontal frame portion 16a. That is, the main frame 16 is the frame having an L-shaped cross section, the horizontal frame portion 16a of the main frame 16 is provided with an auxiliary frame (not illustrated) that partitions the horizontal frame portion 16a, and the main frame 16 is mounted to the rotary shaft 12 so as to be able to rotate in response to the rotation of the rotary shaft 12. In addition, the main frame 16 is mounted to the rotary shaft 12 via a slide guide rail 16c fixed to the horizontal frame portion 16a of the main frame 16, and the main frame 16 is thereby able to move in parallel in sliding directions (an arrow P) of the slide guide rail 16c on the horizontal plane vertically intersecting the axial direction. The main frame 16 is coupled to a cam 18 that is formed so as to conform to a grinding shape, and moves in parallel to the rotary shaft 12 by following the shape of the cam 18 while rotating. The cam 18 is, e.g., a grooved cam, and has a groove portion formed into the grinding shape. A cam follower 17 extending from the main frame 16 is guided along the groove portion, whereby the main frame 16 rotates along the cam 18 and, in the case where the groove portion is not circular, the main frame 16 moves in parallel along the slide guide rail 16c in accordance with a change in diameter. Note that the configuration in which the main frame 16 is caused to rotate and move in parallel along the shape of the cam 18 is not limited to the above-described configuration in which the main frame 16 is mounted to the rotary shaft 12 via the slide guide rail 16c, and it is also possible to adopt, e.g., a configuration in which the main frame 16 is caused to rotate and move in parallel by directly coupling the main frame 16 to the rotary shaft 12, and causing the rotary shaft 12 to rotate along the cam 18 and move in parallel along the slide guide rail.

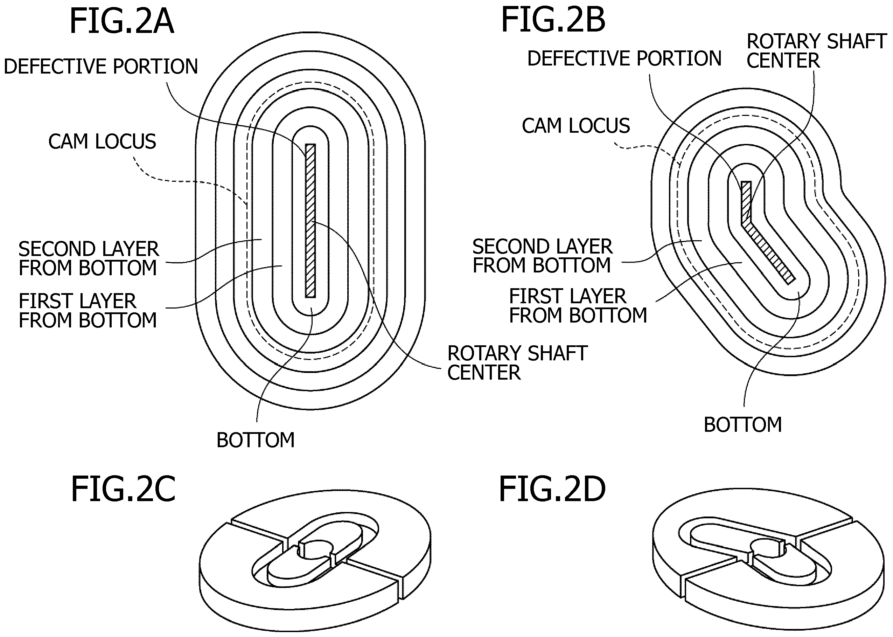

Figs. 2A-2D are views illustrating examples of the locus and external structure of the cam 18, Figs. 2A and 2B illustrate examples of the locus of the cam 18, and Figs. 2C and 2D illustrate examples of the external structure of the cam 18 corresponding to Figs. 2A and 2B. The groove portion is formed so as to conform to the shape of a defective portion such that the defective portion is surrounded. Subsequently, as will be described later, a concave portion obtained by removing the defective portion is grinded layer by layer into a bowl-like shape with the concave portion serving as a bottom along the locus of the groove potion in such a manner that contour lines are drawn. The cam 18 is formed so as to conform to the defect shape in advance, and scarf sanding to any defect shape is thereby allowed.

The space frame portion 16b of the main frame 16 forms space in the axial direction, a first swingable frame 20 is disposed beyond the space so as to face the horizontal plane vertically intersecting the axial direction, and is swingably mounted to a pivot A that is positioned at the lower end of the space frame portion 16b of the main frame 16 and is displaced from the shaft center on one side of the first swingable frame 20. The pivot A may also be provided in a portion in which the horizontal frame portion 16a and the space frame portion 16b are coupled to each other. In this case, the space frame portion 16b is formed to have the L-shaped cross section.

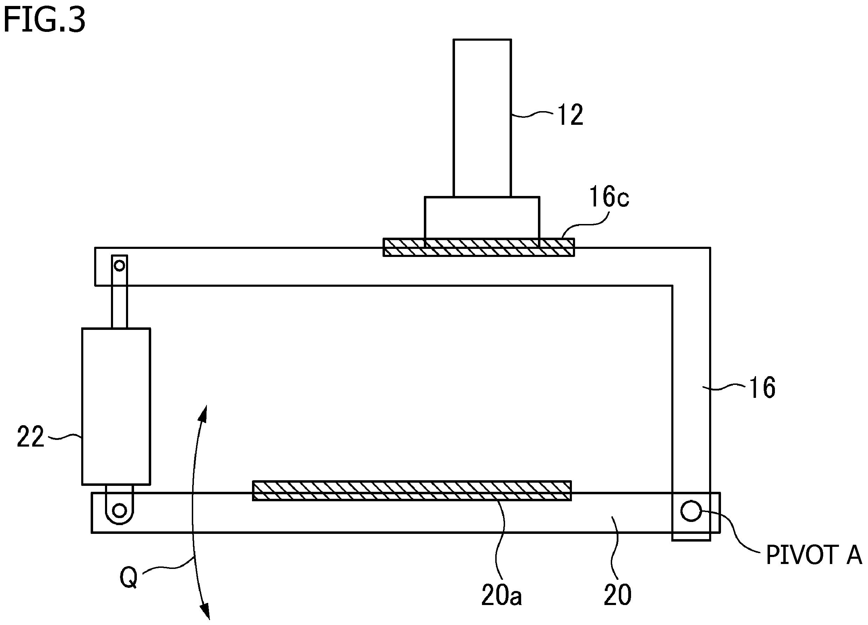

Fig. 3 is a partial view illustrating the configuration of coupling between the main frame 16 and the first swingable frame 20. The first swingable frame 20 is able to swing in directions of an arrow Q in Fig. 1 about the pivot A, and is coupled to the main frame 16 via an extendable cylinder 22 on the opposite side to the pivot A across a rotary shaft center. The cylinder 22 limits the width of vertical movement of the first swingable frame 20, and eases the operation of the first swingable frame 20. The first swingable frame 20 descends about the pivot A by the weight of the first swingable frame 20, a contact 30 and a grindstone 32 (described later) descend in synchronization with the descent of the first swingable frame 20 to come into contact with the workpiece, and an arrangement allowing grinding is established.

The first swingable frame 20 is provided with an auxiliary frame (not illustrated) that partitions the first swingable frame 20, and a slide guide rail 20a is mounted to the auxiliary frame. In addition, a pitch feed frame 24 is mounted to the slide guide rail 20a. The pitch feed frame 24 is able to move in parallel to the first swingable frame 20 along the slide guide rail 20a.

The pitch feed frame 24 adjusts the grinding pitch of the grindstone mounted to a second swingable frame 28 coupled to the pitch feed frame 24 by moving in parallel to the first swingable frame 20. The parallel movement of the pitch feed frame 24 may be manual parallel movement or electrically controlled parallel movement.

The second swingable frame 28 has the contact 30 that comes into contact with the surface of the workpiece, and the grindstone 32 that grinds the workpiece, is coupled to the pitch feed frame 24 at a pivot B provided on a perpendicular extending from the center of the contact position of the contact 30 that is displaced from the shaft center, and is able to swing in directions of an arrow R in Fig. 1 relative to the pitch feed frame 24 about the pivot B. The grindstone 32 is mounted to the second swingable frame 28 so as to grind a portion in the vicinity of the contact position of the contact 30.

The second swingable frame 28 has a horizontal frame portion 28a that is disposed so as to face a plane intersecting the axial direction, a contact holding unit 28b that extends vertically downward from the position of the horizontal frame portion 28a that is displaced from the shaft center, and a grindstone holding unit 28c that is provided in the vicinity of the contact holding unit 28b. The contact 30 formed of two balls is rotatably mounted to the lower end portion of the contact holding unit 28b.

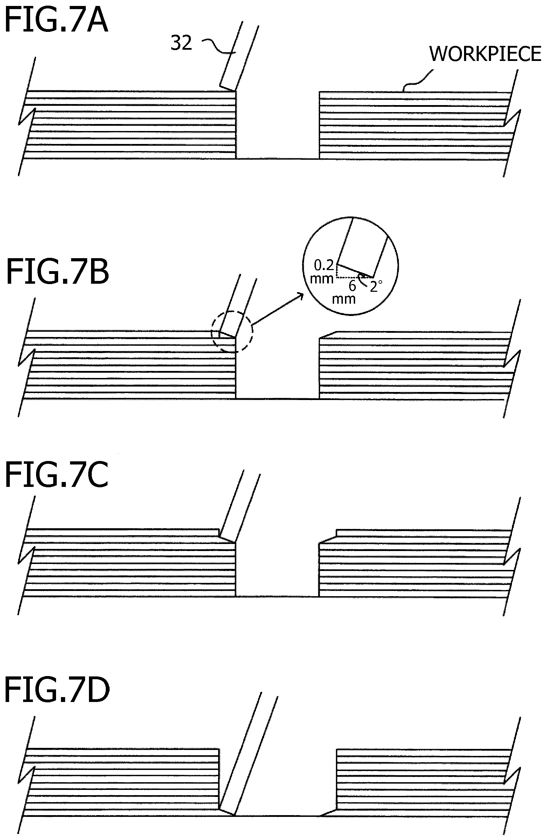

The grindstone 32 is a grinding disk, and a diamond wheel is preferably used as the grindstone 32. The grindstone 32 is mounted to the grindstone holding unit 28c in a state in which the disk stands vertically such that the peripheral surface of the grindstone 32 grinds the workpiece. The grindstone 32 grinds the workpiece using the peripheral surface while rotating and revolving around the machining center of the workpiece in accordance with the rotation of the main frame 16. The grindstone 32 is preferably mounted so as to be inclined at about 2 degrees relative to its vertical state (see Fig. 7B).

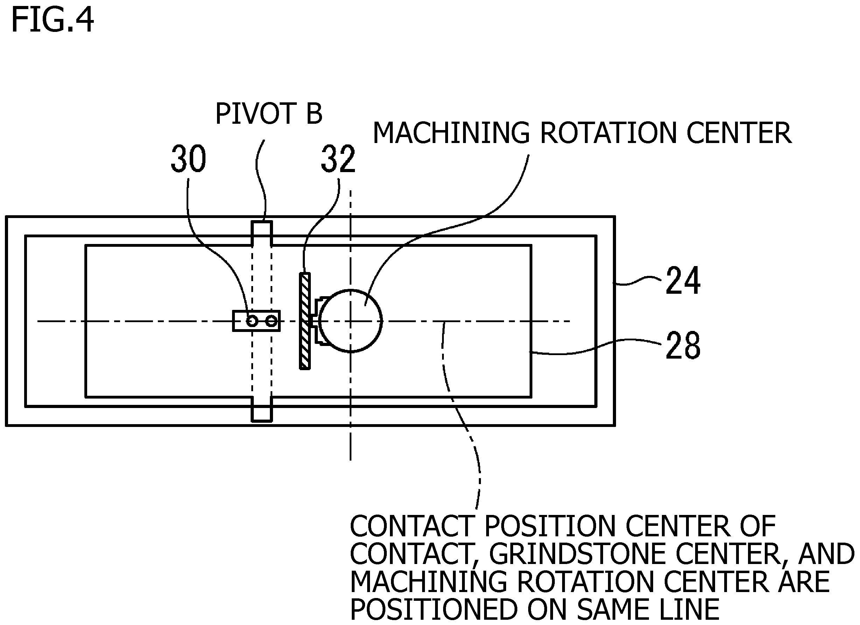

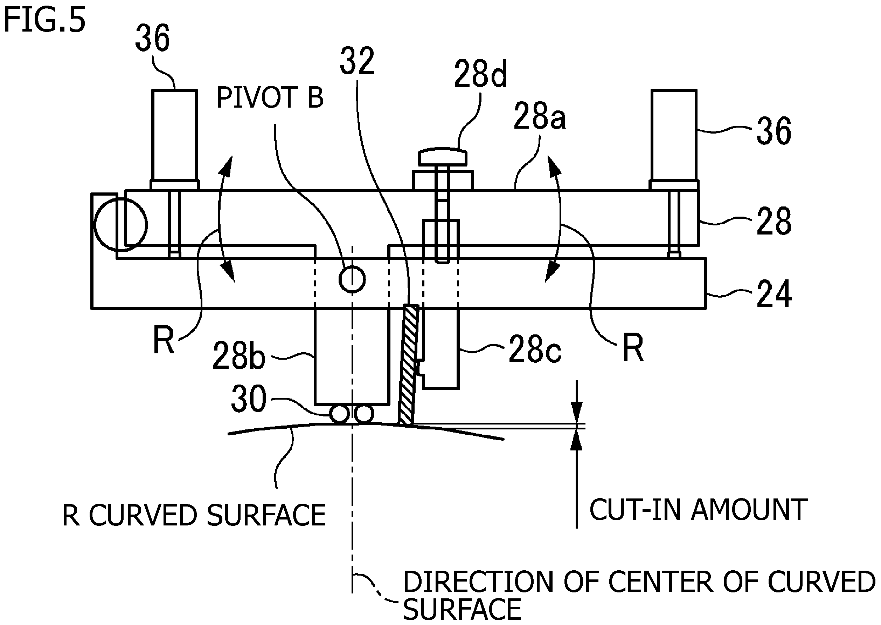

Fig. 4 is a view in which a positional relationship between the pitch feed frame 24 and the second swingable frame 28 is viewed from above. Fig. 5 is a partial view illustrating the configuration of coupling between the pitch feed frame 24 and the second swingable frame 28. The grindstone 32 is mounted to the second swingable frame 28 such that the grinding center is positioned on a line segment connecting the shaft center and the contact center of the contact 30. The two balls constituting the contact 30 are disposed such that the two balls come into contact with the workpiece at different positions, and the contact positions thereof are arranged on the line segment. With this disposition, it is possible to obtain height responsiveness to a curved surface, i.e., the position of the grindstone 32 is adjusted by converting a change of a difference in height between the two balls of the contact 30 to a swing about the pivot B, and it is possible to keep the grinding depth constant. It is possible to handle a curved surface having R500 to R3000 mm and a complex curved surface. The number of balls constituting the contact 30 may be three or more.

In addition, the grindstone holding unit 28c includes an adjustment mechanism 28d with, e.g., a screw that adjusts the grinding depth (cut-in amount) of the grindstone, and is able to adjust the grinding depth appropriately. The adjustment of the cut-in amount may be manual adjustment or electrically controlled adjustment.

There is provided a fixing mechanism 34 that fixes the second swingable frame 28 to the pitch feed frame 24. By fixing the second swingable frame 28 to the pitch feed frame 24, it is possible to prevent the second swingable frame 28 from shaking when the second swingable frame 28 is caused to move vertically, e.g., at the start and end of grinding. When grinding is performed, by releasing the fixing mechanism 34, the second swingable frame 28 is allowed to swing about the pivot B relative to the pitch feed frame 24. The fixing mechanism 34 of the second swingable frame 28 is constituted by, e.g., a disk brake.

Additionally, in order to further prevent the second swingable frame 28 from shaking when the second swingable frame 28 is fixed by the fixing mechanism 34, there are provided pressure cylinders 36 that press the second swingable frame 28 against the pitch feed frame 24. The pressure cylinders 36 control the pressing force of the contact 30 mounted to the lower end portion of the contact holding unit 28b, and stabilize the grinding depth.

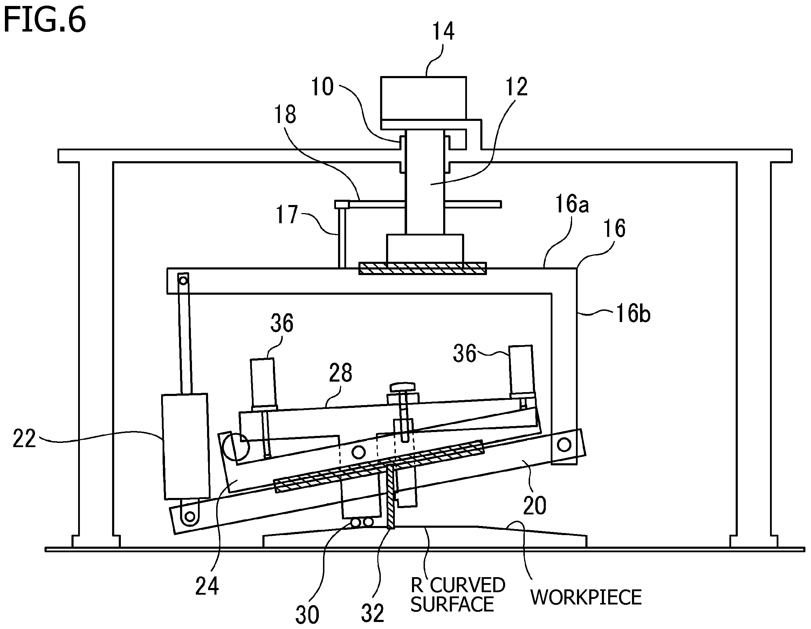

Fig. 6 is a view illustrating the state of the grinding device when the fixing mechanism 34 is released and the grinding operation is allowed or being performed. With the descent of the first swingable frame 20, the first swingable frame swings about the pivot A, the side thereof opposite to the pivot A gradually descends, the pitch feed frame 24 coupled to the first swingable frame 20 and the second swingable frame 28 coupled to the pitch feed frame 24 at the pivot B gradually descend in synchronization with the descent of the side thereof opposite to the pivot A, and the contact 30 and the grindstone 32 come into contact with the workpiece. Contact pressure can be adjusted by the extendable cylinder 22.

When the contact 30 mounted to the second swingable frame 28 comes into contact with the workpiece having a curved surface shape, the heights of the contact 30 and the grindstone 32 are maintained and do not change.

The grindstone 32 grinds the workpiece using the peripheral surface while rotating in accordance with the rotation of the main frame 16. During the rotation, the contact 30 follows the curved surface shape and the second swingable frame 28 swings, whereby it is possible to control the grinding depth of the grindstone during the rotation to a constant value.

By changing the grinding depth adjusted by the adjustment mechanism every round and further causing the second swingable frame 28 to move in parallel at a pitch shorter than the thickness of the peripheral surface of the grindstone 32 at a predetermined round timing, it becomes possible to perform layer-by-layer grinding (layer grinding) in which the workpiece is grinded into the bowl-like shape including the shaft center as the bottom.

Figs. 7A-7D, 8A-8D, and 9 are views schematically illustrating steps of layer grinding. A defective portion is removed in a step (2) in Fig. 12, and grinding is performed by scarf sanding in a step (3) in Fig. 12 while the grindstone revolves around a portion having a concave cross section. As illustrated in Fig. 7A, first, the grindstone 32 is positioned at the opening end of the concave portion by causing the pitch feed frame 24 to slide, and one-round grinding is performed at the position. A grinding width (layer distance) is 6 mm and, in contrast to this, the grinding depth of one round by the grindstone 32 (a difference between the lower end of the contact 30 and the lower end of the grindstone 32) is set to, e.g., 0.2 mm by operating the adjustment mechanism 28d. Note that the grindstone 32 is mounted so as to be inclined at about 2 degrees (1.9 degrees) relative to the vertical, and grinding is performed with the angle maintained. This is because, in a scarf sanding process, grinding at an inclination angle of 1:30 is a standard (see Fig. 7B).

Fig. 7B illustrates a grinding state after one round. After one round, the grinding depth is further increased by 0.2 mm (the total grinding depth is 0.4 mm) by operating the adjustment mechanism 28d, and one-round grinding is further performed.

Fig. 7C illustrates the grinding state after two rounds. Thus, by increasing the grinding depth by 0.2 mm every round, grinding is performed up to the bottom of the concave portion.

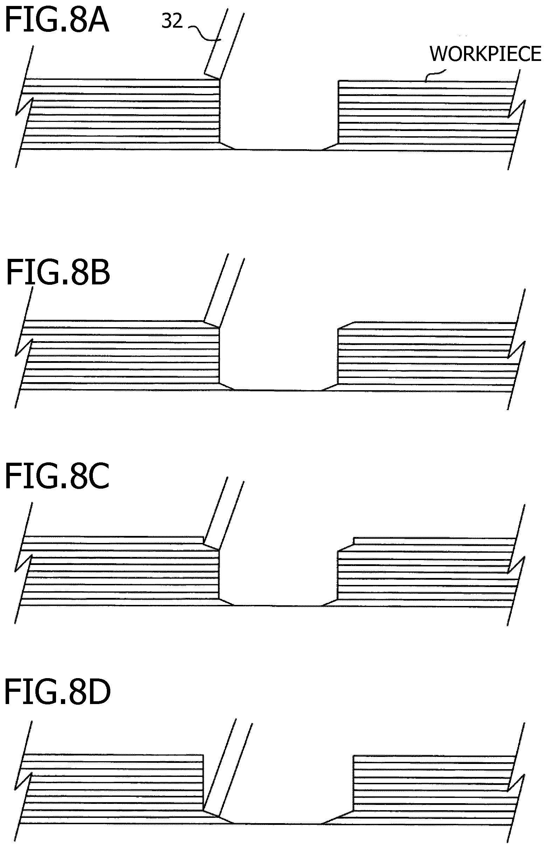

Fig. 7D illustrates a state in which grinding is performed up to the bottom of the concave portion. The grinding depth is set back to the initial depth of 0.2 mm by using the adjustment mechanism 28d, and, as illustrated in Fig. 8A, the grindstone 32 is positioned at the opening end of the concave portion having been subjected to grinding illustrated in Fig. 7D by causing the pitch feed frame 24 to slide by 6 mm. Subsequently, grinding is performed according to the same procedure as that in Figs. 7A to 7D described above. The sliding amount (layer distance) of 6 mm is used in order to secure the inclination angle of 1:30 that is needed in scarf sanding with respect to the grinding depth of 0.2 mm (0.2:6 = 1:30). In this case, the thickness of the grindstone 32 only needs to be not less than 6 mm, and grinding based on sliding by 6 mm is performed even when the thickness of the grindstone 32 is more than 6 mm. By causing grinding areas to overlap, the end of the grinding area is made smoother, and scarf sanding having high quality is implemented.

Thus, scarf sanding in the bowl-like shape including the shaft center as the bottom is allowed by causing the grindstone 32 to grind the workpiece using the peripheral surface while rotating in accordance with the rotation of the main frame 16, changing the grinding depth adjusted by the adjustment mechanism 28d every round, and further causing the second swingable frame 28 to move in parallel at the pitch shorter than the thickness of the peripheral surface of the grindstone 32 at the predetermined round timing.

Fig. 8B illustrates a state in which one-round grinding has been performed in a state in Fig. 8A, Fig. 8C illustrates a state in which one round grinding has been additionally performed in the state in Fig. 8B, and Fig. 8D illustrates a grinding state in which the number of times of one-round grinding is smaller than that in Figs. 7A to 7D by one in order to secure the inclination of 2 degrees from the bottom of the concave portion.

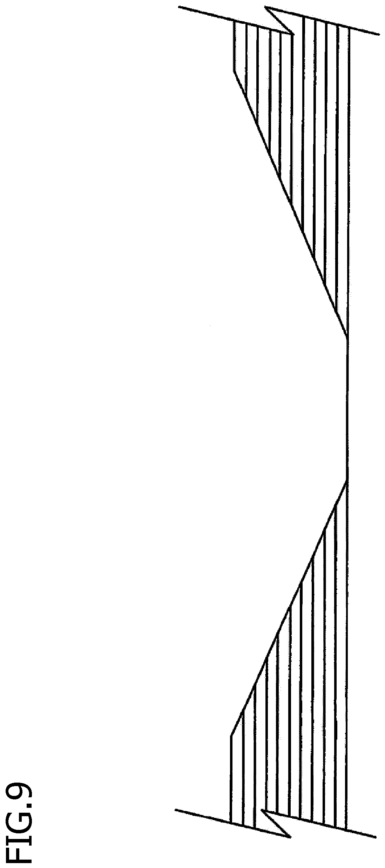

Further, the step in which the grinding depth is set back to 0.2 mm, the pitch feed frame 24 is caused to slide by 6 mm, and grinding is performed is repeated and, lastly, the shape of scarf sanding illustrated in Fig. 9 is completed.

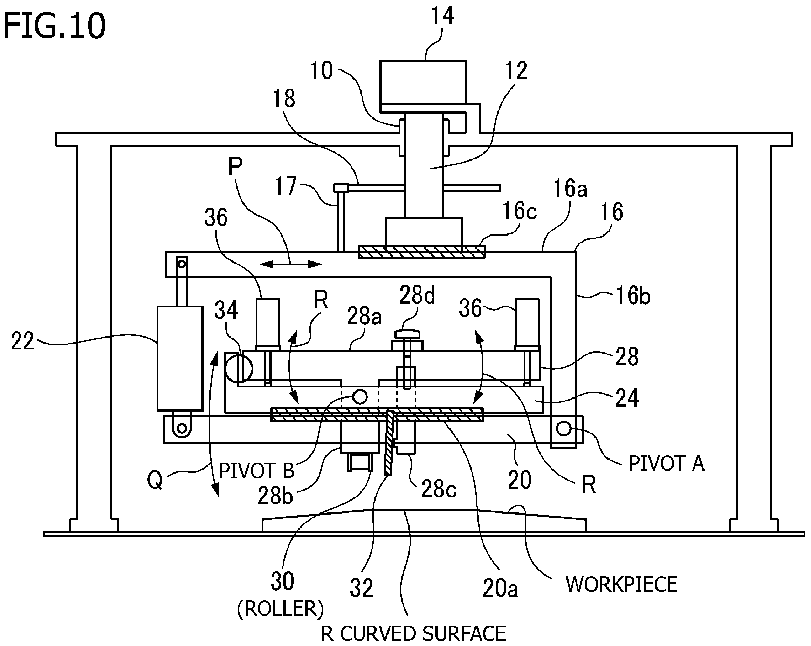

Fig. 10 is a view illustrating a second configuration of the grinding device for scarf sanding in the embodiment of the present invention. The second configuration is different from the first configuration in that the contact 30 is formed of a roller that comes into contact with the workpiece at two locations. Similarly to the first configuration, the two contact positions of the roller where the roller comes into contact with the workpiece are disposed so as to be arranged on the line connecting the shaft center and the grinding center of the grindstone. That is, the two contact positions of the roller, the shaft center, and the grinding center are positioned on the same line. The number of contact positions of the roller may be three or more.

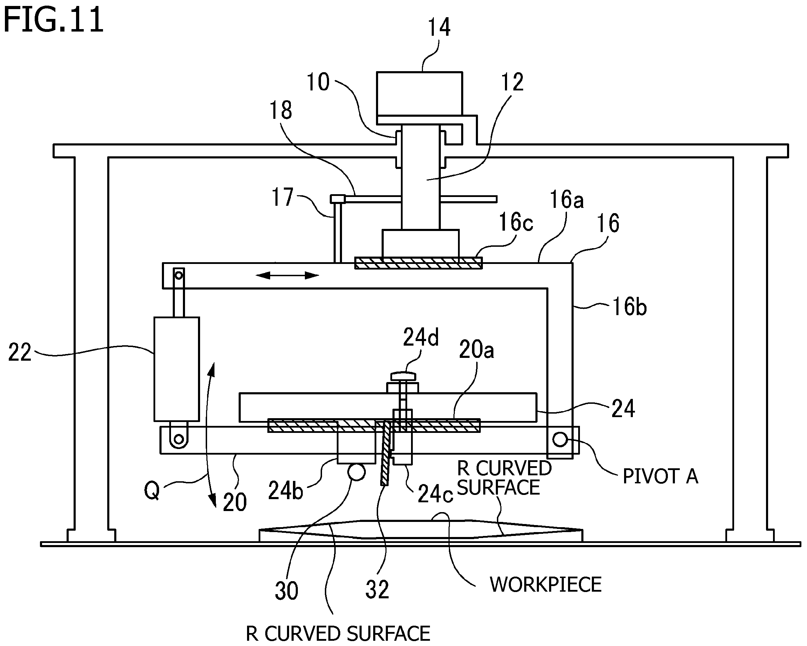

Fig. 11 is a view illustrating a third configuration of the grinding device for scarf sanding in the embodiment of the present invention. The third configuration is different from the first configuration in that the second swingable frame 28 and the pivot B are omitted, the contact 30 and the grindstone 32 are mounted to the pitch feed frame 24, the curved surface of the workpiece is followed only by using the swing about the pivot A, and scarf sanding is thereby performed. Specifically, the grinding device of the third configuration includes the main frame 16 that rotates about the rotary shaft 12, and is able to move in parallel on the horizontal plane vertically intersecting the axial direction, the first swingable frame 20 that is disposed so as to be spaced from the main frame 16 in the axial direction, and is swingably mounted to the main frame 16, and the pitch feed frame 24 that is mounted to the first swingable frame 20 so as to be able to move in parallel on the horizontal plane intersecting the axial direction. The first swingable frame 20 is coupled to the main frame 16 at the pivot A provided so as to be displaced from the shaft center, and is able to swing relative to the main frame 16 about the pivot A. The pitch feed frame 24 is provided with a contact holding unit 24b that holds the contact 30, a grindstone holding unit 24c that holds the grindstone 32, and an adjustment mechanism 24d that adjusts the grinding depth of the grindstone 32, and these are similar to the corresponding structures provided in the second swingable frame 28 described above. The pitch feed frame 24 is able to swing in response to the swing of the first swingable frame 20, and the grindstone 32 is mounted to the pitch feed frame 24 so as to grind the portion in the vicinity of the contact position of the contact 30.

The pivot A is the only pivot of the swing, and hence the contact 30 is formed of one ball, and the number of contact positions thereof is one. Similarly to the first configuration, the contact position of the ball to the workpiece is disposed so as to be arranged on the line connecting the shaft center and the grinding center of the grindstone. Even when the contact is made based on one contact position, in the case of a relatively gentle curved surface, it is possible to follow the curved surface shape with relatively high accuracy. In addition, in the case where the workpiece is formed of a flat surface, it is possible to follow the shape even with one contact position.

In the above embodiment, the workpiece is the composite material in which the CFRP used as the material of the body of the aircraft is stacked in layers. However, the workpiece is not limited thereto, and it is also possible to use, as the workpiece, other composite materials such as, e.g., GFRP (glass fiber reinforced plastics), and other materials that can be grinded. In addition, the grinding device is not limited to the material used in the body of the aircraft, and can also be applied to workpieces used in other fields such as the field of an automobile and the fields of a rocket and space.

In addition, the above-described embodiment has described the configuration in which the workpiece placed on the stand is grinded (vertically downward grinding) by way of example, and it is possible to perform an operation irrespective of the orientation of a machined surface by mounting the above configuration on, e.g., an industrial robot. In this case, with regard to the above-described configuration that uses gravity, it becomes possible to perform an operation that does not depend on the attitude of the machined surface by using a known pressurization unit such as a hydraulic cylinder.

The present invention is not limited to the above embodiment, and needless to mention, the present invention includes design change within the scope of the appended claims.

### REFERENCE SIGNS LIST

- 10:: FRAME CASE
- 12:: ROTARY SHAFT
- 14:: DRIVE MOTOR
- 16:: MAIN FRAME
- 16a:: HORIZONTAL FRAME PORTION
- 16b:: SPACE FRAME PORTION
- 16c:: SLIDE GUIDE RAIL
- 17:: CAM FOLLOWER
- 18:: CAM
- 20:: FIRST SWINGABLE FRAME
- 20a:: SLIDE GUIDE RAIL
- 22:: EXTENDABLE CYLINDER
- 24:: PITCH FEED FRAME
- 28:: SECOND SWINGABLE FRAME
- 28a:: HORIZONTAL FRAME PORTION
- 28b:: CONTACT HOLDING UNIT
- 28c:: GRINDSTONE HOLDING UNIT
- 28d:: ADJUSTMENT MECHANISM
- 30:: CONTACT
- 32:: GRINDSTONE
- 34:: FIXING MECHANISM
- 36:: PRESSURE CYLINDERS

## Claims

1. A grinding device for grinding a workpiece, the grinding device comprising:
a main frame (16) that rotates about a rotary shaft (12) and is able to move in parallel on a horizontal plane vertically intersecting an axial direction;
a first swingable frame (20) that is disposed so as to be spaced from the main frame (16) in the axial direction and is swingably mounted to the main frame (16);
a pitch feed frame (24) that is mounted to the first swingable frame (20) so as to be able to move in parallel on a horizontal plane intersecting the axial direction; and
a second swingable frame (28) that is swingably mounted to the pitch feed frame (24), wherein
the first swingable frame (20) is coupled to the main frame (16) at a first pivot (A) provided so as to be displaced from a shaft center, and is able to swing relative to the main frame (16) about the first pivot (A),
the second swingable frame (28) has a contact (30) that comes into contact with a surface of the workpiece and a grindstone (32) that grinds the workpiece, is coupled to the pitch feed frame (24) at a second pivot (B) provided on a perpendicular extending from a center of a contact position of the contact (30) that is displaced from the shaft center, and is able to swing relative to the pitch feed frame (24) about the second pivot (B), and
the grindstone (32) is mounted to the second swingable frame (28) so as to grind a portion in a vicinity of the contact position of the contact (30).

2. The grinding device according to Claim 1, wherein
the grindstone (32) is mounted to the second swingable frame (28) such that a grinding center is positioned on a line segment connecting the shaft center and a contact center of the contact (30).

3. The grinding device according to Claim 1 or 2, wherein
the first swingable frame (20) is coupled to the main frame (16) via an extendable cylinder (22) on an opposite side to the first pivot (A) across the shaft center.

4. The grinding device according to any one of Claims 1 to 3, further comprising:
a cam (18) that is formed into a grinding shape, wherein
the main frame (16) rotates and moves in parallel along the cam (18).

5. The grinding device according to any one of Claims 1 to 4, further comprising:
a fixing mechanism (34) that fixes the second swingable frame (28) to the pitch feed frame (24), wherein
the second swingable frame (28) is allowed to swing relative to the pitch feed frame (24) by releasing the fixing mechanism (34).

6. The grinding device according to any one of Claims 1 to 5, further comprising:
an adjustment mechanism (28d) that adjusts a grinding depth of the grindstone (32).

7. The grinding device according to any one of Claims 1 to 6, wherein the grindstone (32) is mounted so as to be inclined relative to the shaft center.

8. The grinding device according to any one of Claims 1 to 7, wherein the contact (30) is formed of two or more balls that come into contact with the workpiece at different positions.

9. The grinding device according to any one of Claims 1 to 7, wherein
the contact (30)is formed of a roller that comes into contact with the workpiece at two or more locations.

10. Method using the grinding device according to any one of Claims 6 to 9 for grinding a workpiece into a bowl-like shape including the shaft center as a bottom,
wherein the grindstone (32) is a grinding disk,
by
causing the grindstone (32) to grind the workpiece using a peripheral surface of the grindstone (32) while rotating in accordance with the rotation of the main frame (16),
changing the grinding depth adjusted by the adjustment mechanism (28d) every round, and
further causing the second swingable frame (28) to move in parallel at a pitch shorter than a thickness of the peripheral surface of the grindstone (32) at a predetermined round timing.

11. A grinding device for grinding a workpiece, the grinding device comprising:
a main frame (16) that rotates about a rotary shaft (12) and is able to move in parallel on a horizontal plane vertically intersecting an axial direction;
a swingable frame (20) that is disposed so as to be spaced from the main frame (16) in the axial direction and is swingably mounted to the main frame (16); and
a pitch feed frame (24) that is mounted to the swingable frame (20) so as to be able to move in parallel on a horizontal plane intersecting the axial direction, wherein
the swingable frame (20) is coupled to the main frame (16) at a pivot (A) provided so as to be displaced from a shaft center, and is able to swing relative to the main frame (16) about the pivot (A),
the pitch feed frame (24) has a contact (30) that comes into contact with a surface of the workpiece and a grindstone (32) that grinds the workpiece, and is able to swing in response to a swing of the swingable frame (20), and
the grindstone (32) is mounted to the pitch feed frame (24) so as to grind a portion in a vicinity of a contact position of the contact (30).

## Patentansprüche

1. Schleifvorrichtung zum Schleifen eines Werkstücks, wobei die Schleifvorrichtung umfasst:
einen Hauptrahmen (16), der sich um eine Drehwelle (12) dreht und auf einer horizontalen Ebene parallel bewegbar ist, welche eine axiale Richtung vertikal schneidet,
einen ersten schwenkbaren Rahmen (20), der von dem Hauptrahmen (16) in axialer Richtung beabstandet angeordnet und am Hauptrahmen (16) schwenkbar montiert ist;
einem Vorschubrahmen (24), der an dem ersten schwenkbaren Rahmen (20) derart montiert ist, dass er auf einer horizontalen Ebene, welche die axiale Richtung vertikal schneidet, parallel bewegbar ist; und
einem zweiten schwenkbaren Rahmen (28), der schwenkbar am Vorschubrahmen (24) angebracht ist, wobei
der erste schwenkbare Rahmen (20) an einem gegenüber einer Wellenmitte versetzten ersten Drehpunkt (A) an den Hauptrahmen (16) gekoppelt ist und um den ersten Drehpunkt (A) relativ zum Hauptrahmen (16) schwenkbar ist,
der zweite schwenkbare Rahmen (28) einen Kontakt (30), der mit einer Oberfläche des Werkstücks in Kontakt kommt, sowie einen Schleifstein (32) aufweist, welcher das Werkstück schleift, an einem zweiten Drehpunkt (B), welcher auf einer Senkrechten liegt, die sich von einer Mitte einer von der Wellenmitte versetzten Kontaktposition des Kontakts (30) aus erstreckt, an den Vorschubrahmen (24) gekoppelt ist, und um den zweiten Drehpunkt (B) relativ zu dem Vorschubrahmen (24) schwenkbar ist, und
der Schleifstein (32) an dem zweiten schwenkbaren Rahmen (28) montiert ist, um einen Abschnitt in der Nähe der Kontaktposition des Kontakts (30) zu schleifen.

2. Schleifvorrichtung nach Anspruch 1, wobei
der Schleifstein (32) so an dem zweiten schwenkbaren Rahmen (28) befestigt ist, dass ein Schleifzentrum auf einem Liniensegment positioniert ist, welches die Wellenmitte und eine Kontaktmitte des Kontakts (30) verbindet.

3. Schleifvorrichtung nach Anspruch 1 oder 2, wobei
der erste schwenkbare Rahmen (20) über einen ausziehbaren Zylinder (22) auf einer dem ersten Drehpunkt (A) über die Wellenmitte gegenüberliegenden Seite an den Hauptrahmen (16) gekoppelt ist

4. Schleifvorrichtung nach einem der Ansprüche 1 bis 3, die weiterhin umfasst:
einen zu einer Schleifform geformten Nocken (18), wobei
der Hauptrahmen (16) sich dreht und parallel entlang dem Nocken (18) bewegt.

5. Schleifvorrichtung nach einem der Ansprüche 1 bis 4, die weiterhin umfasst:
einen Befestigungsmechanismus (34), der den zweiten schwenkbaren Rahmen (28) am Vorschubrahmen (24) befestigt, wobei
der zweite schwenkbare Rahmen (28) gegenüber dem Vorschubrahmen (24) durch Freigeben des Befestigungsmechanismus (34) zu schwingen vermag.

6. Schleifvorrichtung nach einem der Ansprüche 1 bis 5, die weiterhin umfasst:
einen Einstellmechanismus (28d), der eine Schleiftiefe des Schleifsteins (32) einstellt.

7. Schleifvorrichtung nach einem der Ansprüche 1 bis 6, wobei der Schleifstein (32) in Bezug zur Wellenmitte geneigt montiert ist.

8. Schleifvorrichtung nach einem der Ansprüche 1 bis 7, wobei der Kontakt (30) aus zwei oder mehr Kugeln gebildet ist, die mit dem Werkstück an verschiedenen Stellen in Kontakt kommen.

9. Schleifvorrichtung nach einem der Ansprüche 1 bis 7, wobei der Kontakt (30) aus einer Rolle gebildet ist, die mit dem Werkstück an zwei oder mehr Stellen in Kontakt kommt.

10. Verfahren unter Verwendung der Schleifvorrichtung nach einem der Ansprüche 6 bis 9 zum Schleifen eines Werkstücks in eine schalenartige Form mit der Wellenmitte als Boden,
wobei der Schleifstein (32) eine Schleifscheibe ist,
durch
das Bewirken, dass der Schleifstein (32) das Werkstück unter Verwendung einer Umfangsfläche des Schleifsteins (32) schleift während er sich in Übereinstimmung mit der Drehung des Hauptrahmens (16) dreht,
die Änderung der durch den Einstellmechanismus justierten Schleifhöhe (28d) bei jeder Runde, und
ferner das Bewirken, dass sich der zweite schwenkbare Rahmen (28) parallel mit einem Abstand bewegt, der kürzer ist als eine Dicke der Umfangsfläche des Schleifsteins (32) zu einem vorbestimmten Rundenzeitpunkt ist.

11. Schleifvorrichtung zum Schleifen eines Werkstücks, wobei die Schleifvorrichtung umfasst:
einen Hauptrahmen (16), der sich um eine Drehwelle (12) dreht und parallel auf einer horizontalen Ebene bewegbar ist, die eine axiale Richtung vertikal schneidet;
einen schwenkbaren Rahmen (20), der vom Hauptrahmen (16) in axialer Richtung beabstandet angeordnet und schwenkbar am Hauptrahmen (16) montiert ist; und
einen Vorschubrahmen (24), der an dem schwenkbaren Rahmen (20) parallel bewegbar auf in einer horizontalen Ebene, die die axiale Richtung schneidet, montiert ist, wobei
der schwenkbare Rahmen (20) an einem gegenüber der Wellenmitte versetzten Drehpunkt (A) an den Hauptrahmen (16) gekoppelt und um den Drehpunkt (A) relativ zu dem Hauptrahmen (16) schwenkbar ist,
der Vorschubrahmen (24) einen Kontakt (30), der mit einer Oberfläche des Werkstücks in Kontakt kommt, sowie einen Schleifstein (32) aufweist, der das Werkstück schleift, und in der Lage ist in Reaktion auf ein Schwingen des schwenkbaren Rahmens (20) zu schwingen, und
der Schleifstein (32) zum Schleifen eines Abschnitts in der Nähe einer Kontaktposition des Kontakts (30) an dem Vorschubrahmen (24) angebracht ist.

## Revendications

1. Dispositif de meulage pour meuler une pièce, le dispositif de meulage comprenant:
un cadre principal (16) tournant autour d'un arbre rotatif (12) qui est mobile en parallèle sur un plan horizontal coupant verticalement une direction axiale;
un premier cadre pivotant (20) qui est disposé à distance du cadre principal (16) dans le sens axial et monté de façon pivotant sur le cadre principal (16);
un cadre d'alimentation (24) monté sur le premier cadre pivotant (20) qui est mobile en parallèle sur un plan horizontal coupant verticalement la direction axiale; et
un deuxième cadre pivotant (28) monté de manière pivotante sur cadre d'alimentation (24), dans lequel
le premier cadre pivotant (20) est couplé au cadre principal (16) à un premier point de pivotement (A) prévu décalée par rapport au centre de l'arbre, et peut pivoter par rapport au cadre principal (16) autour du premier point de pivotement (A)
le deuxième cadre pivotant (28) ayant un contact (30) qui vient en contact avec une surface de ladite pièce et ayant une meule (32) qui meule la pièce est montée sur le cadre d'alimentation (24) à un deuxième point de pivotement (B) prévu sur une perpendiculaire s'étendant à partir d'un centre d'une position de contact du contact (30) déplacée par rapport au centre de l'arbre, et est capable de se balancer par rapport au cadre d'alimentation (24) autour du deuxième point de pivotement (B), et
la meule (32) est montée sur le deuxième cadre pivotant (28) afin de meuler une partie au voisinage de la position de contact du contact (30).

2. Dispositif de meulage selon la revendication 1, dans lequel la meule (32) est fixée sur le deuxième cadre pivotant (28) de telle sorte qu'un centre de meulage est positionné sur un segment de ligne reliant le centre de l'arbre et un centre de contact dudit contact (30).

3. Dispositif de meulage selon la revendication 1 ou 2, dans lequel le premier cadre pivotant (20) est couplé au cadre principal (16) par un cylindre extensible (22) sur un côté opposé au premier point de pivotement (A) à travers le centre de l'arbre.

4. Dispositif de meulage selon l'une des revendications 1 à 3, comprenant en outre:
une came (18) formée dans une forme de meulage, dans laquelle le cadre principal (16) tourne et se déplace parallèlement le long de la came (18).

5. Dispositif de meulage selon l'une des revendications 1 à 4, comprenant en outre:
un mécanisme de fixation (34) fixant le deuxième cadre pivotant (28) au cadre d'alimentation (24), dans lequel
le deuxième cadre pivotant (28) peut se balancer par rapport au cadre d'alimentation (24) en libérant le mécanisme de fixation (34).

6. Dispositif de meulage selon l'une des revendications 1 à 5, comprenant en outre:
un mécanisme d'ajustement (28d) ajustant une profondeur de meulage de la meule (32).

7. Dispositif de meulage selon l'une des revendications 1 à 6, dans lequel la meule (32) est montée de manière à être inclinée par rapport au centre de l'arbre.

8. Dispositif de meulage selon l'une des revendications 1 à 7, dans lequel le contact (30) est formé de deux ou plusieurs billes qui entrent en contact avec la pièce à différentes positions.

9. Dispositif de meulage selon l'une des revendications 1 à 7, dans lequel le contact (30) est formé d'un rouleau qui entre en contact avec la pièce à deux ou plusieurs points.

10. Procédé utilisant le dispositif de meulage selon l'une des revendications 6 à 9 pour meuler une pièce en une forme de coquille, incluant le centre de l'arbre servant de fond,
dans lequel la meule (32) est un disque de meulage,
en
amenant la meule (32) à meuler la pièce en utilisant une surface périphérique tout en tournant conformément à la rotation du cadre principal (16),
modifiant la profondeur de meulage ajustée par le mécanisme de réglage (28d) à chaque tour, et
provoquant en outre le deuxième cadre pivotant (28) à se déplacer en parallèle à un pas plus court qu'une épaisseur de la surface périphérique de la meule (32) à un moment de tour prédéterminé.

11. Dispositif de meulage pour meuler une pièce, le dispositif de meulage comprenant:
un cadre principal (16) qui tourne autour d'un arbre rotatif (12) et est capable de se déplacer en parallèle sur un plan horizontal coupant verticalement une direction axiale;
un cadre pivotant (20) qui est disposé de manière à être espacé du cadre principale (16) dans la direction axiale et est monté pivotant sur le cadre principal (16); et
un cadre d'alimentation (24) monté sur le cadre pivotant (20) de manière à pouvoir se déplacer en parallèle sur un plan horizontal coupant la direction axiale,
dans lequel
le cadre pivotant (20) est couplé au cadre principal (16) au niveau d'un point de pivotement prévu pour être déplacé d'un centre d'arbre, et est capable de pivoter par rapport au cadre principal (16) autour du pivot (A),
le cadre d'alimentation (24) ayant un contact (30) qui vient en contact avec une surface de la pièce et ayant une meule (32) qui rectifie la pièce, et est capable de se balancer en réponse à un basculement du cadre pivotant (20), et
la meule (32) est montée sur le cadre d'alimentation (24) de manière à meuler une partie au voisinage d'une position de contact du contact (30).
